# EUROPÄISCHE PATENTSCHRIFT

(11) **EP 1 873 039 B1**
(45) Veröffentlichungstag und Bekanntmachung des Hinweises auf die Patenterteilung: **27.04.2011**
(21) Anmeldenummer: 07011931.8
(22) Anmeldetag: 19.06.2007
(51) Int. Cl.: B62D 5/04, B62D 15/02

(54) **Verfahren zur Einstellung eines Lenkbereichs bei einer elektrischen Lenkung für ein Flurförderzeug**
Method for adjusting the steering range of the electrical steering for an industrial truck
Procédé destiné au réglage de la plage d'angle pour une direction électrique pour un chariot de manutention

(30) Priorität: 28.06.2006 DE 102006029587
(43) Veröffentlichungstag der Anmeldung: 02.01.2008
(73) Patentinhaber: Jungheinrich Aktiengesellschaft, 22047 Hamburg (DE)
(72) Erfinder: Kramer, Dieter, Dipl.-Ing., 24558 Ulzburg (DE); Steiner, Michael, Dipl.-Ing., 22965 Todendorf (DE); von Thienen, Nils, Dipl.-Ing., 22305 Hamburg (DE)
(74) Vertreter: Schildberg, Peter

(56) Entgegenhaltungen:
- EP-A- 0 967 135
- EP-A- 1 447 306
- WO-A-2004/016493
- DE-A1- 19 511 301
- DE-C1- 19 714 786
- FR-A- 2 848 974
- FR-A- 2 856 147

## Beschreibung

Die vorliegende Erfindung betrifft ein Verfahren zur Einstellung eines Lenkbereichs bei einer elektrischen Lenkung für ein Flurförderzeug. Grundsätzlich ist es so, daß bei Flurförderzeugen ein begrenzter Lenkbereich vorliegen kann, bei dem der Verstellwinkel eines oder mehrerer zu lenkender Räder physikalisch beschränkt ist. Diese Beschränkung kann sich beispielsweise durch ein verwendetes Getriebe ergeben. Es kann sich aber auch aus dem physikalischen Aufbau des Lenkantriebes ergeben, daß der Winkelbereich, in dem das oder die zu lenkenden Räder verstellt werden können, begrenzt ist.

Die Lenksteuerung für ein Flurförderzeug muß nach einem ersten Einbau in das Fahrzeug initialisiert werden. Hierzu müssen die Sensorsignale mit der Lage der gelenkten Räder bzw. des gelenkten Rades abgeglichen werden. Ein solcher Abgleich zwischen Sensorsignal und Position des Rades ist nicht nur bei einem ersten Einbau der Lenkung in das Flurförderzeug notwendig, sondern auch nach Wartungs- und Reparaturarbeiten, bei denen es möglicherweise zu einer Verstellung der Lenkung gekommen ist.

Der Ablauf einer typischen Lenkeinrichtung geht so vonstatten, daß nach dem Einbau die Position der Räder an den rechten und linken Anschlag gestellt wird. Für jede dieser Positionen wird der Ist-Wert des Sensors in der aktuellen Stellung gespeichert. Für eine Lenksteuerung ist damit der Zusammenhang hergestellt zwischen der tatsächlichen Position der Räder, nämlich an einem der Anschläge, und den zugehörigen Sensorwerten in dieser Position. Aufgrund dieser Werte kann dann den gemessenen Sensorwerten im Winkelbereich des Rades ein Wert zugeordnet werden.

Bei dem herkömmlichen Verfahren kommt hinzu, daß auch die Geradeausstellung mit den Sensorsignalen abgeglichen wird. Dieser vorbeschriebene Einstellvorgang erfolgt manuell, indem die Räder in die Position gestellt und beispielsweise über die Betätigung einer Taste an einer Steuerung die zugehörigen Sensorsignale gespeichert werden.

Aus DE 197 14 786 C1 ist eine Lenkeinrichtung, die eine erste Erfassungseinrichtung für eine Bewegung des Lenkantriebs relativ zu seiner Ausgangsposition ermittelt und eine zweite Erfassungseinrichtung aufweist, die für mindestens eine Position des Lenkantriebs ein Referenzsignal erzeugt. Für eine solche elektrische Lenkung wird eine Endanschlagsüberwachungseinrichtung vorgeschlagen, die die Endposition des gelenkten Rades ermittelt und einen Begrenzer aufweist, der die Bewegung des Rades auf einen vorbestimmten Winkelbereich begrenzt, der mit Abstand zu den Endpositionen endet. Zur Erfassung der Endposition ist vorgesehen, die mechanischen Anschläge für das gelenkte Rad automatisch zu Beginn des Betriebes anzufahren und die so festgestellte Winkelposition in einer Steuereinrichtung abzulegen.

Aus DE 195 11 301 C2 ist ein Verfahren zur Justierung eines Potentiometers zur Lenkwinkelerfassung bekannt. Das Potentiometer besitzt einen begrenzten Drehbereich. Durch Vorsehen einer Rutschkupplung wird das Potentiometer zu Beginn der Justage an einen einseitigen Anschlag gefahren, während zugleich auch das gelenkte Rad an den entsprechenden Anschlag gefahren wird.

Der Erfindung liegt die Aufgabe zugrunde, ein Verfahren zur Einrichtung einer elektrischen Lenkung bei einem Flurförderzeug bereitzustellen, das mit einfachen Mitteln in kurzer Zeit einen Abgleich der Sensorsignale mit der Radstellung gestattet und eine Ausrichtung für die Geradeausfahrt ermittelt.

Erfindungsgemäß wird die Aufgabe durch ein Verfahren mit den Merkmalen aus Anspruch 1 gelöst. Vorteilhafte Ausgestaltungen bilden den Gegenstand der Unteransprüche.

Das erfindungsgemäße Verfahren dient zur Einstellung eines Lenkbereichs einer elektrischen Lenkung bei einem Flurförderzeug. Die elektrische Lenkung besitzt einen Lenkwinkelgeber und einen Lenkantrieb, der ein oder mehrere zu lenkende Räder an dem Flurförderzeug einstellt. Die elektrische Lenkung ist mit einem Ist-Wert-Sensor versehen, der die aktuelle Stellung von dem mindestens einen zu lenkenden Rad erfaßt. Das Einstellen des Lenkbereichs erfolgt erfindungsgemäß mit mindestens zwei Verfahrensschritten. In einem Einstellmodus verfährt der Lenkantrieb in einem ersten Schritt das mindestens eine zu lenkende Rad aus seiner aktuellen Stellung in eine Richtung, bis der gemessene Ist-Wert des verstellten Rades sich nicht weiter ändert. Der in dieser Stellung gemessene Ist-Wert für das mindestens eine zu lenkende Rad wird als Winkelanschlag in der ersten Richtung in einer Lenksteuerung abgelegt. In einem nachfolgenden Schritt verfährt der Lenkantrieb das mindestens eine zu lenkende Rad in die entgegengesetzte Richtung bis der gemessene Ist-Wert des verstellten Rades sich nicht weiter ändert. Der in dieser zweiten Stellung gemessene Ist-Wert wird als Winkelanschlag in der zweiten Richtung in der Lenksteuerung abgelegt. Bei dem erfindungsgemäßen Verfahren wird über die Lenksteuerung das mindestens eine zu lenkende Rad automatisch an die Anschläge verfahren und die Sensorwerte zu diesen Positionen werden automatisch gespeichert.

Erfindungsgemäß nimmt die Lenksteuerung einen Mittelwert zwischen dem ersten und dem zweiten Anschlag als Sensorwert für eine Geradeausfahrt an. Dieser angenommene Sensorwert wird in der Lenksteuerung abgelegt und bildet in einem nachfolgenden Modus zur Feineinstellung den Ausgangspunkt, um den Sensorwert für die Geradeausfahrt exakt einzustellen.

Um zu vermeiden, daß beim Anfahren des zweiten Anschlags das gelenkte Rad mit großer Geschwindigkeit auf den Anschlag trifft, wird erfindungsgemäß die Verfahrgeschwindigkeit ab einem vorbestimmten Verdrehwinkel, der gegenüber dem ersten Winkelanschlag zurückgelegt wurde, reduziert. Das Abbremsen vor dem Anschlag erlaubt es, den größten Teil des Winkelbereichs mit einer hohen Geschwindigkeit zu durchfahren, wodurch sich die Gesamtdauer für das Einstellen des Lenkbereichs verkürzt.

In einer bevorzugten Weiterführung des erfindungsgemäßen Verfahrens wird neben dem Fall, in dem der Ist-Winkel sich verändert, überprüft, ob der Strom des Lenkantriebs ansteigt. Auf diese Weise kann zusätzlich oder alternativ geprüft werden, ob das zu lenkende Rad seine Endlage am Anschlag erreicht hat.

Das erfindungsgemäße Verfahren wird nachfolgend anhand einer Zeichnung näher erläutert.

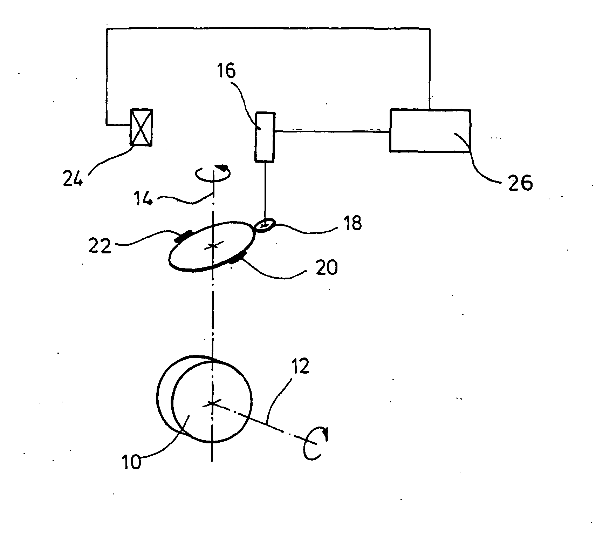

Ein möglicher Einsatz für die elektrische Lenkung bei Flurförderzeugen sind deichselgelenkte Flurförderzeuge, bei denen ein einziges Antriebsrad 10 in einem Schemel um eine horizontale Achse 12 gelagert ist und der Schemel seinerseits um eine vertikale Achse 14 im Rahmen des Flurförderzeugs schwenkbar aufgehängt ist. Der Schemel trägt einen Antriebsmotor für das gelenkte Rad, der über ein Getriebe mit dem Antriebsrad in Wirkverbindung steht. Durch ein Verschwenken der Deichsel, grundsätzlich kann auch jeder andere Lenkgeber hier vorgesehen sein, wird ein Sollwert für den Drehwinkel des Antriebsrades 10 um die Achse 14 vorgegeben. Um diesen Winkel einzustellen, treibt der Antriebsmotor 16 den Schemel mit dem Antriebsrad 10 an und stellt diesen in die gewünschte Winkelposition um die Achse 14. Der Antriebsmotor 16 steht über ein Ritzel 18 in Wirkverbindung mit dem Drehschemel des Antriebsrades. Statt eines Ritzels 18 können auch eine Kette oder ein Riemenantrieb verwendet werden. Die Anschläge für die Drehung um die Achse 14 sind in der Figur als Anschläge 20 und 22 schematisch dargestellt.

Der Ist-Wert des um die Achse 14 verstellten Drehschemels wird durch einen Sensor 24 erfaßt. Sowohl Sensor 24 als auch Lenkantrieb 16 sind mit einer Lenksteuerung 26 verbunden.

Bei dem erfindungsgemäßen Verfahren wird die Lenksteuerung vor einem ersten Betrieb oder nach Reparaturen an dem Flurförderzeug, bei denen sich die Lenkung verstellt haben könnte, in einen Initialisierungsmodus gebracht. In dem Initialisierungsmodus wird der Lenkantrieb 16 angesteuert, um den Drehschemel gegen den Uhrzeigersinn um die Achse 14 zu drehen, bis dieser an dem Anschlag 20 gestoppt wird. Ein Sensor 24 erfaßt diese Position und legt diese in der Lenksteuerung 26 ab. Der Sensor 24 ist dabei bevorzugt als ein frei drehbarer Sensor ausgebildet, beispielsweise ein Hall-Sensor, der keinen begrenzten Winkelbereich besitzt, sondern durchgehend gedreht werden kann. Anders als bei der Verwendung eines Potentiometers, wie beispielsweise in DE 195 11 301 C2, kann ein erstes Verstellen zum Ausrichten des Potentiometers auf seinen Drehbereich entfallen, wodurch der Aufbau der Lenkung deutlich vereinfacht wird. Nachfolgend ermittelt die Lenksteuerung 26 einen Positionswert, der in einem Abstand vor dem zweiten Anschlag 22 liegt. Dies kann beispielsweise erfolgen, indem ein vorbestimmter Spannungswert von dem aktuellen Spannungswert des Sensors 24 abgezogen oder hinzugezählt wird. Der so bestimmte Spannungswert des Sensors wird dann angefahren.

Die so abgeschätzte Position wird von der Lenksteuerung 26 über den Lenkantrieb mit einer erhöhten Drehgeschwindigkeit angesteuert. Ist die abgeschätzte Position erreicht, so erfolgt ein langsames Verdrehen, bis der Anschlag 22 erreicht ist. Der entsprechende Wert des Sensors 24 wird dann in der Lenksteuerung 26 abgelegt. Bevor die Sensorwerte als Maximalwerte gespeichert werden, überprüft die Lenksteuerung 26, ob der Versorgungsstrom für den Lenkantrieb 16 steigt.

Neben dem in der Figur dargestellten Ausführungsbeispiel, bei dem die Lenksteuerung das erfindungsgemäße Verfahren durchführt, ist es ebenfalls möglich, das Verfahren in einer Wartungs- und Diagnoseeinrichtung zu integrieren. In dieser Ausgestaltung kann eine Einstellung der elektrischen Lenkung, beispielsweise nach Wartungsarbeiten, erfolgen. Durch das Einbinden des erfindungsgemäßen Verfahrens in eine Wartungs- und Diagnoseeinrichtung kann das Verfahren auch bei der Wartung bereits im Betrieb befindlicher Flurförderzeuge eingesetzt werden.

## Patentansprüche

1. Verfahren zur Einstellung eines Lenkbereichs für ein Flurförderzeug mit einer elektrischen Lenkung, die einen Lenkwinkelgeber und einen Lenkantrieb für ein oder mehrere zu lenkende Räder (10) aufweist, wobei ein Ist-Wertsensor die aktuelle Stellung von mindestens einem der zu lenkenden Räder (10) erfaßt,
**gekennzeichnet durch** folgende Verfahrensschritte:
- in einem Einstellmodus fährt der Lenkantrieb das mindestens eine zu lenkende Rad (10) aus seiner aktuellen Stellung in eine Richtung, bis der gemessene Ist-Wert des verstellten Rades (10) sich nicht weiter ändert, der in dieser Stellung gemessene Ist-Wert wird als Winkelanschlag in der ersten Richtung in einer Lenksteuerung abgelegt,
- in einem nachfolgenden Schritt verfährt der Lenkantrieb das mindestens eine zu lenkende Rad (10) in die entgegengesetzte Richtung, bis der gemessene Ist-Wert des verstellten Rades (10) sich nicht weiter ändert, der in dieser Stellung gemessene Ist-Wert des Sensors (24) wird als Winkelanschlag in der zweiten Richtung in der Lenksteuerung abgelegt,
- wobei die Lenksteuerung (26) einen Mittelwert zwischen dem ersten und dem zweiten Anschlag als Sensorwert für eine Geradeausfahrt in der Lenksteuerung (26) ablegt und
- der Lenkantrieb beim nachfolgenden Schnitt ab einem vorbestimmten Verdrehwinkel gegenüber dem ersten Winkelanschlag die Geschwindigkeit reduziert.

2. Verfahren nach Anspruch 1, **dadurch gekennzeichnet, daß** die Lenksteuerung in dem Fall, in dem der Ist-Winkel sich nicht weiter ändert, überprüft, ob der Strom des Lenkantriebs ansteigt.

3. Verfahren nach Anspruch 1 oder 2, **dadurch gekennzeichnet, daß** der Sensor (24) frei drehbar mit einem unbegrenzten Winkelbereich ist.

4. Verfahren nach Anspruch 3, **dadurch gekennzeichnet, daß** der Sensor (24) als Hall-Sensor ausgebildet ist.

## Claims

1. Method for adjusting a steering range for an industrial truck with an electric steering, which features a steering angle transmitter and a steering drive for one or plural wheels (10) to be steered, wherein an actual value sensor acquires the momentary position of at least one of the wheels (10) to be steered, **characterised by** the following procedural steps:
• in an adjustment mode, the steering drive moves the at least one wheel (10) to be steered from its momentary position into one direction, until the measured actual value of the adjusted wheel (10) stops to continue to change, the actual value measured in this position is laid down in a steering control as the angle limit stop in the first direction,
• in a subsequent step, the steering drive moves the at least one wheel (10) to be steered into the opposite direction, until the measured actual value of the adjusted wheel (10) stops to continue to change, the actual value of the sensor (24) measured in this position is laid down in a steering control as the angle limit stop in the second direction,
• wherein the steering control (26) deposits a mean value between the first and the second limit stop as the sensor value for a straight forward travel in the steering control (26), and
• in the subsequent step, the steering drive reduces the speed from on a predetermined rotational angle with respect to the first angle limit stop.

2. Method according to claim 1, **characterised in that** in case the real angle stops to continue to change, the steering control checks whether the current of the steering drive increases.

3. Method according to claim 1 or 2, **characterised in that** the sensor (24) can freely rotate with an unlimited angle range.

4. Method according to claim 3, **characterised in that** the sensor (24) is realised as Hall sensor.

## Revendications

1. Procédé destiné au réglage d'une plage d'angle pour un chariot de manutention avec une direction électrique qui a un transmetteur d'angle de braquage et un mécanisme de direction à entraînement pour une ou plusieurs roues (10) à diriger, dans lequel un capteur de valeur réelle détecte la position momentanée d'au moins une des roues (10) à diriger, **caractérisé par** les étapes d'opération suivantes :
• dans un mode d'ajustage, le mécanisme de direction à entraînement fait avancer l'au moins une roue (10) à diriger de sa position momentanée à une direction, jusqu'à ce que la valeur réelle mesurée de la roué ajustée (10) ne se change plus, la valeur réelle mesurée dans cette position est déposée dans une unité de commande de direction comme butée angulaire dans la première direction,
• dans une étape subséquente, le mécanisme de direction à entraînement fait avancer l'au moins une roue (10) à diriger dans la direction opposée, jusqu'à ce que la valeur réelle mesurée de la roué ajustée (10) ne se change plus, la valeur réelle mesurée du capteur (24) dans cette position est déposée dans une unité de commande de direction comme butée angulaire dans la deuxième direction,
• dans laquelle l'unité de commande de direction (26) dépose une valeur moyenne entre la première et la deuxième butée comme la valeur de capteur pour une marche en ligne droite dans l'unité de commande de direction (26), et
• dans l'étape subséquente, le mécanisme de direction à entraînement réduit la vitesse à partir d'une angle de rotation prédéterminé par rapport à la première butée angulaire.

2. Procédé selon la revendication 1, **caractérisé en ce que** dans le cas que l'angle réel ne se change plus, l'unité de commande de direction examine si le courant du mécanisme de direction à entraînement monte.

3. Procédé selon la revendication 1 or 2, **caractérisé en ce que** le capteur (24) est librement orientable avec une plage angulaire illimitée.

4. Procédé selon la revendication 3, **caractérisé en ce que** le capteur (24) est réalisé comme un capteur de Hall.
